Europäisches Patentamt

European Patent Office

Office européen des brevets

(19)

(11) **EP 1 109 633 B1**

(12) **EUROPEAN PATENT SPECIFICATION**

(45) Date of publication and mention
of the grant of the patent:
**28.12.2005 Bulletin 2005/52**

(51) Int Cl.⁷: **B09B 3/00**

(21) Application number: **99940410.6**

(22) Date of filing: **25.08.1999**

(86) International application number:
**PCT/HR1999/000018**

(87) International publication number:
**WO 2000/012234 (09.03.2000 Gazette 2000/10)**

(54) **PROCESS AND PLANT FOR PREPARATION AND TREATING OF COMMUNAL AND INDUSTRIAL WASTES INTO USABLE PRODUCTS**

VERFAHREN UND ANLAGE ZUM VORBEHANDELN UND AUFBEREITEN VON KOMMUNALEN UND INDUSTRIELLEN ABFÄLLEN ZUR HERSTELLUNG VON VERWENDBAREN PRODUKTEN

PROCEDE ET USINE DE PREPARATION ET DE TRAITEMENT DE DECHETS COMMUNAUX ET INDUSTRIELS, SERVANT A TRANSFORMER CEUX-CI EN PRODUITS UTILISABLES

(84) Designated Contracting States:
**AT BE CH CY DE DK ES FI FR GB GR IE IT LI LU MC NL PT SE**

(30) Priority: **01.09.1998 HR 980486**

(43) Date of publication of application:
**27.06.2001 Bulletin 2001/26**

(73) Proprietor: **Spanovic, Milli**
**21420 Bol (HR)**

(72) Inventor: **Spanovic, Milli**
**21420 Bol (HR)**

(74) Representative: **Lieck, Hans-Peter et al**
**Boeters & Lieck**
**Widenmayerstrasse 36**
**80538 München (DE)**

(56) References cited:
**EP-A- 0 306 430**     **FR-A- 2 687 081**
**GB-A- 1 052 798**     **US-A- 5 430 237**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

# EP 1 109 633 B1

**Description**

## 1. FIELD OF APPLICATION

The invention relates to a process and a plant for preparation and treating of communal and industrial wastes into usable products, according to the preambles of claims 1 and 4. Particularly, the invention relates to treatment, processing and utilisation of many sorts of wastes, especially.

## 2. TECHNICAL PROBLEM

Various sorts of waste materials of industrial and communal origin differ by their physical properties, chemical contents, form, effecting on each other and the environment, as well as other characteristics.

In many sorts of wastes there is present hydrocarbon, which exists in large numbers of compounds, connections, fractions, states and influences.

In many sorts of organic and organic/inorganic wastes, existing and contained mostly in communal waste sources, there are stable biological waste orders, various sorts of ashes and powders, papers, cardboards and embalage, glasses of various colours, various plastics, magnetic and nonmagnetic metals, non-metals, fabrics, leather, wood and wood wastes, paints and varnishes, solvents and emulsions, medicines, pesticides, soil, ceramics, stone, mixed building debris, etc.

In wastes of industrial origin there are multitudes of sorts of materials, differing by the nature of their source in primary, secondary and tertiary forms of treatment and processing. Like in communal wastes, here too there are numerous inorganic and organic/inorganic wastes, classified into special, industrial, noxious, poisonous, toxic, even radioactive matters.

Many contemporary sorts of wastes are present mostly in mixtures, common collections at collecting locations, mixed, etc. whereby they make new matters, compounds of changed physical, chemical, mechanical, biological and other properties, creating thus a separate sort of waste.

Such common waste, usually dumped at communal, industrial, sanitary and other collection and dumping sites, make a specific sort of waste that is, according to this invention, recuperated, immobilised, neutratised and processed into an industrially usable, technically new form material of the form of hydrophobic powder - solidificate.

The technical problem is in the above mentioned wastes solidification process, aimed to obtaining quality solidificate, being performed in plants and facilities that treat only particular sorts of wastes classified mostly by their content of hydrocarbons, their states of matter, their content of halogen, heavy metals and elements effecting the process (phosphorus, sulphur, nitrogen, chlorine, CN compounds), and particular linked anions ($OH^-$, $SO_4^{2-}$, $NO_3$) and cations ($R_{1,2}^+$, $H^+$), etc.

A technical problem is also the way of conducting the technological treatment of wastes of different properties and behaviour in its mixing, exothermic reaction, vacuum-gas incapsulation and solidification, because precise conditions of compounds and molecules dissociation are to be observed, and as better as possible TTT (temperature, time, transformation) balance is to be achieved, and the solidification process is to be implemented with regard to differences of electrochemical potentials of particular elements, molecules and ions (treatment reaction speed, quantity, relations and conditions).

Yet another technical problem is present at establishing the equipment and plant types and sorts, treatment adequate for particular wastes, this resulting in one reactor room built enabling treatment of one but limiting treatment of another waste. Therefore, reactors with cutters, mixers and vortex units (with solid inserts) there appears choking of dry or fine powder waste, and with silts (e.g. silt separators and purifiers of industrial waters) there is the problem of sticking against the reactor walls and deposition in the early part of the treatment. Wastes containing hard pieces of various dimensions (wire, wood, glass, plastics, etc.) usually require reactor space of different design and transmission speed, as well as creating of material translation into the space with the process reactants.

Technical problems also appear about precision of determining the process duration, material quantity, process temperature, exothermic reaction pressures, water steam degassing degree, gas flow speed, mixing quality, creating resistance at turning from one state of matter into another, time and place of charging the process additives, time of coming of the solidificates out and decreasing of their dimensions.

Plants and equipment intended for such waste treatment, already known to the invention author, produced in accordance with this or the same author's previous inventions, satisfy the requirements of obtaining of adequate solidificate sorts and qualities.

Technical problems of such plants and equipment are also in their dependence on certain waste treatments, so that, according to reactor spaces design, there are 12 basic and practical variants: 1) industrially oiled wastes (hydrocarbons); 2) refinery and used motor oils, gudrons, oiled electrofilter and incinerator ashes, etc.; 3) greases, oils and lubricants, paraffins, clay etc.; 4) emulsions, solvents, paint and varnish remains; 5) waste-water separator and purifier silts, galvanic silt, etc.; 6) disposed medicines, powders, pharmaceutical preparations; 7) textile, glass and leather industry wastes; 8) mineral acids, acid industrial wastes, organic acids; 9) oils with high contents of PCB, PCT, CN and heavy metals; 10) oils with high contents of phosphorus, nitrogen and halogen ($PO_4^{3-}$, $NO_3^-$, $Cl^-$); 11) dangerous, toxic, poisonous and high-risk wastes; 12) radioactive wastes.

The characteristics of this technical problem is in the often occurrence of various mixtures of wastes of the above groups, this requiring selecting and special preparations of the waste mixture for particular make of the processing plant reactor space, which increases the technical requirements, makes the procedure more difficult and requires various sorts of plants and equipment at the same place.

Another technical problem occurs in case of changing the waste treatment by the same plant, requiring significant changes and modifications of the plant, which is impractical and requiring time-consuming and complex expert work.

With a significant number of communal and industrial wastes, it has been found out that hydrocarbon contents are very high, this resulting in solidificates of high level of oil discharge, high content of total carbohydrates and high residues after incinerating at 105°C.

Technical problem also occurs at communal waste treatments, at material separation and selection aimed to utilisation of recycled raws, because in biological waste there also appear high contents of mixed carbohydrates which compounds also appear in composts intended for farming land recultivation, and this resulting in negative effects to nature and environment.

The applicant knows (P-1279/86, P-2123/87, P-1768/86, P-1679/86, P-950/87, P-2232/87, P-1301/90, P-578/90, all filed with the former Yugoslavia's National Patent Office, and corresponding P 940323 N, P 940324, P 940325, P 940326, P 931506, P 970530 A, P 980049 A, all filed with the State Institute for Intellectual Property of the Republic of Croatia and P 9500158 N filed with the Patent Office for Intellectual Property of the Republic of Slovenia) solidificates as products of physical and chemical processes during treating many sorts of waste oils and special wastes (carbohydrates), by adequate technological treatments, using adequate plants and equipment.

## 3. STATE OF THE ART

From FR-A-2687081, being the basis for the preambles of claims 1 and 4, an apparatus is known for the preparation and treatment of communal waste wherein a pre-preparation plant comprises intake hoppers, material fragmentation, loosening and a transportation line, and wherein the treatment line comprises basic and additives holding hoppers, dosification means and belt conveyors for transportation.

US-A-5430237 describes a method of solidifying oil based shale cuttings and used drilling mud on site by thoroughly mixing the shale cuttings and drilling mud with an activated lime mixture to form a uniform dispersion of the lime mixture throughout the composite. The mixture is dried and its acidic components are neutralized to produce an environmentally safe end product.

To the author's best knowledge, presently in the world there is no unique technical-technological solution that could treat all the above mentioned 12 types of industrial and communal wastes in one treatment cycles, with one reactor unit, that would produce the final conditions of simultaneous vacuum-gas incapsulation, i.e. gas incapsulation by vaccum, in exothermic conditions of the reactor space, eventually producing high quality solidificates adequate for further industrial utilisation, and water steam free from noxious contents.

Many liquid or semi-liquid wastes from industrial sources are being treated as uniform wastes and stored in pools, tanks and slops, or dumped into bilges.

Such wastes are usually produced in manufacturing and processing industries, such as waste oils, gudrons, separator silts, emulsions, heating-plant, incinerator and electro power-plant ashes, as well as metal and non-metal dusts, paint and varnish remnants, asbestos waste, textile and leather industry wastes, mazout-tar wastes, resins, galvanic silts, pharmaceutical industry wastes, oils and greases originating from motor industry, thermo-electric power-plant, petroleum refineries, petrochemistry and other industries.

Plants and equipment for solidification of waste oils and special wastes (carbohydrates), producing high-quality solidificates for use in road and similar constructing, house constructing, power production, for building technical barriers against toxic, noxious, poisonous and radioactive materials, or for communal collection, have already been applied in industry, in accordance with this author's other patent claims, designs and documentation, as well as with this claim.

## 4. DISCLOSURE OF THE INVENTION

This invention's primary goal is ecological intervention regarding dangerous and special industrial wastes that, when subjected to the adequate technical and technological process and equipment, turn from this, environmentally noxious and unacceptable form to an ecologically acceptable form, acceptable for further technical use, handling, transport, storage and exploitation.

The next invention's goal is, by such processing, to obtain a quality product - solidificate, of physical, chemical and mechanical properties of a technically new material that can be industrially used as a useful basic material or additive.

Further invention's goal is that the material obtained this way by processing wastes has better properties than other presently known and similar materials, by its characteristics such as ecological impact, resistance to natural effects, economy in obtaining and application, simplicity of further use, etc.

According to the invention these objects are achieved by the features of claims 1 or 4, respectively.

Particular embodiments of the invention are the subject of the dependent claims.

The invention is utilised by means of specially designed plants and its auxiliary equipment, all of them characterised by uniformity of design and accepting various sorts of wastes regardless of their states of matter (liquid, solid, paste) and regardless of the chemical content of particular sorts, enabling by means of determining input quantities of particular materials and additives always to achieve optimum conditions for implementation of the technological process that will result in high-quality sorts of solidificates and water steam with no noxious contents.

The plant made in accordance with this invention enables conducting of the technological treatment process because it consists of parts and equipment that equalise plant conditions of the TTT-balance where physical and chemical reactions take place, effecting the transformation (T) of one or more sorts of materials, at a given temperature (T) and within a given time (T), and molecules dissociation according to their electrochemical potentials in thermodynamic conditions of the reactor unit spaces, as well as vacuum-gas incapsulation in exothermic conditions of treatment.

## 5. DESCRIPTION OF ILLUSTRATIONS

For the purpose of further explanation of the procedure and plant for preparation and treating of communal and industrial wastes, attached hereto there are drawings that illustrate the flow of materials, their treatment and conditions of creating high-quality solidificates.

Fig. 1.    Vertical cross-section of the plant for treatment of communal and industrial wastes into usable products.
Fig. 2.    Block-diagram of the plant for treatment of communal and industrial wastes into usable products.
Fig. 3.    Diagram of auxiliary facility for waste pre-preparation (grinding, mixing, loosening).
Fig. 4.    Schematic principle of waste separation by sorts.
Fig. 5.    Diagram of the plant for preparation of waste mixture for loading into holds.
Fig. 6.    Physical-chemical process block-diagram.

Input materials, that are to be treated, are placed into holds A, B, C and D, and process additives into holds E and F. Wastes of liquid properties are placed into holds A and B, and solids into C and D.

Hold A is intended for storing loose materials (ash, soil, sand, powder etc.), and hold B for liquid wastes (used motor oils, gudron, oiled water and similar), while mixes like slim, clay, mud, oiled soil, filter sediments and similar are stored in hold C.

Holds B and C contain vibrator grill 1 powered by the motor 2, and the vortex unit 3, directing the material and loading it, after overturning, by means of the motor 4 into the reactor. The mixed material is conveyed from the first to the second part of the plant by the pipe extension 11 with vortex unit 12 which, by means of the motor 13, directs the material and loads it, after overturning, into the lower reactor space.

The first reactor line 15, powered by its own motor-variator 16 (allowing changing of rotations and flow speed), produces waste mixture of uniform content, determined beforehand according to quantities of particular sorts, the final mixture content to be subjected to the wanted technological process.

The second reactor line, powered by its own motor-variator 18, enables acceptance of $Ca^{2+}$ based additives of two sorts: calcium oxide CaO and calcium hydroxide $Ca(OH)_2$, that make the entire addition to the processing, producing the required exothermic reaction and the required TTT-balance conditions of state.

In a part of the reactor space equipped with two engines that distribute the material conveyance speed during the processing (due to the worm-transporter separated blades), there are created conditions for vacuum-gas incapsulation, because between such barriers filled with material there occur layers of steam from where air and steam are taken out by blades of the rotor located on prominent sleeves on two-pole motor shafts.

White the incapsulation conditions are being created, there occur microexplosions as a dissociative part of the technological process, resulting in breaking of molecules into ionic charged particles that, then, in accordance with the difference of electrochemical potentials as related to $Ca^{2+}$ and $OH^-$ close the chain of complex molecules and compounds that have calcium as their outer membrane, acting as acceptor in the reaction TTT-balance.

Complex anion microparticles, captured in the accelerator, obtain calcium characteristics, because, in the gaseous cloud, this anion positions itself in the central position of the new molecule structure, creating prerequisites of its balance, becoming thus stabile and leaving the reactor space as such.

Incapsulation is enabled by incapsulator motors 19 and 20, located where conditions for its implementation following the process exothermic reaction occurrence are the best.

During the microexplosions taking place in the reactor, and if there are more steam layers, and the encapsulation initial conditions have been fulfilled, the entire prepared mixture will solidificate almost at the same time, where the atom $Ca^{2+}$ will make a complex molecule with influential anions in dissociated space and will make the carrier, whereas the $OH^-$ hydroxy-group will make a new group of anions and will take the role of building the state balance.

This is a chemically balanced state where physical-chemical reactions take place, the stoichiometric conditions, however, being achieved at both sides of the chemical reaction.

Complex anion microparticles, captured in the accelerator, obtain calcium characteristics, because, in the gaseous cloud, this anion positions itself in the central position of the new molecule structure, creating prerequisites of its balance, becoming thus stabile and leaving the reactor space as such.

Incapsulation is enabled by incapsulator motors 19 and 20, located where conditions for its implementation following the process exothermic reaction occurrence are the best.

During the microexplosions taking place in the reactor, and if there are more steam layers, and the encapsulation initial conditions have been fulfilled, the entire prepared mixture will solidificate almost at the same time, where the atom $Ca^{2+}$ will make a complex molecule with influential anions in dissociated space and will make the carrier, whereas the $OH^-$ hydroxy-group will make a new group of anions and will take the role of building the state balance. This is a chemically balanced state where physical-chemical reactions take place, the stahiometric conditions, however, being achieved at both sides of the chemical reaction.

This was preceded by continuous adding of calcium oxide (and/or calcium hydroxide) from holds E and F, their quantities and relations to the sorts and quantities of treated materials being determined in accordance with the wanted reaction intensity that will, eventually, make the decisive influence to a finely or badly conducted technological process.

Steam exits (with particles of possibly surplus free calcium) through the opening 25, and it is forced (by axial-radial ventilator and pump) to water washing and, through sieve and bag filter, the particles and contents being returned to the treatment process as filter deposits.

In order to decrease the steam and other gases coming out, the plant is equipped with pipe bridges and condensers that return it to the treatment process as water. The solidificate is conveyed by belt conveyor 26 or compressed (to less than one half or one third of its initial size) by a continuos press that shapes the solidificate as rolls (e.g., $\varnothing$ 120 x 500 mm) about 15 kg in weight. Solidificate may also be pressed in a compressing container of communal type, or even sucked into standard tank truck.

Sampling of mixture, for checking the treated material content and chemical properties, is done through the opening 14, of solidificate at the exit from reactor near the opening 22, and of steam at the final coming out after steam filtering.

Dosing of particular wastes and additives that are to be treated is done by the dosers 5 and 6, provided with gauging marks in order to determine the flows. Adjusting of flow, materials and additives quantities, the first and the second reactor line speeds, process temperature and graded mixing of materials and additives at their entrance, which can be semi- or fully automatic, according to the processing programme set, determine the wanted conditions for the treatment and obtaining of high-quality solidificates, as well as separates steam from noxious contents.

Running of the process produces energy that is turned into work and heat, where work is distributed to the process of dissociation which, based on electrochemical potentials of elements in reaction make conditions for vacuum-gas incapsulation, and heat is distributed to the exothermic process and steam production.

The energy contained in the internal steam participates in making numerous microexplosions and vacuum spaces as well as in heat losses.

## 6. DETAILED DESCRIPTION OF INVENTION UTILISATION

The main plant characteristics, according to the invention, are the first and the second reactor lines that make the preparatory and the processing part of the plant, this because of the wastes that contain hydrocarbons, mixed with other sorts of organic-inorganic wastes, regardless of the sort but with regard to their portion in the treatment structure, and to the way of pre-preparation and pre-treatment of wastes, which become materials uniform and fit for treatment in the plant.

The next plant characteristics, according to the invention, is the way and place of adding additives to the technological process, resulting in avoiding choking, stoppages and sticking, and their adding is exercised at the place of beginning of creating conditions for the process exothermics, followed by vacuum-gas incapsulation and solidification.

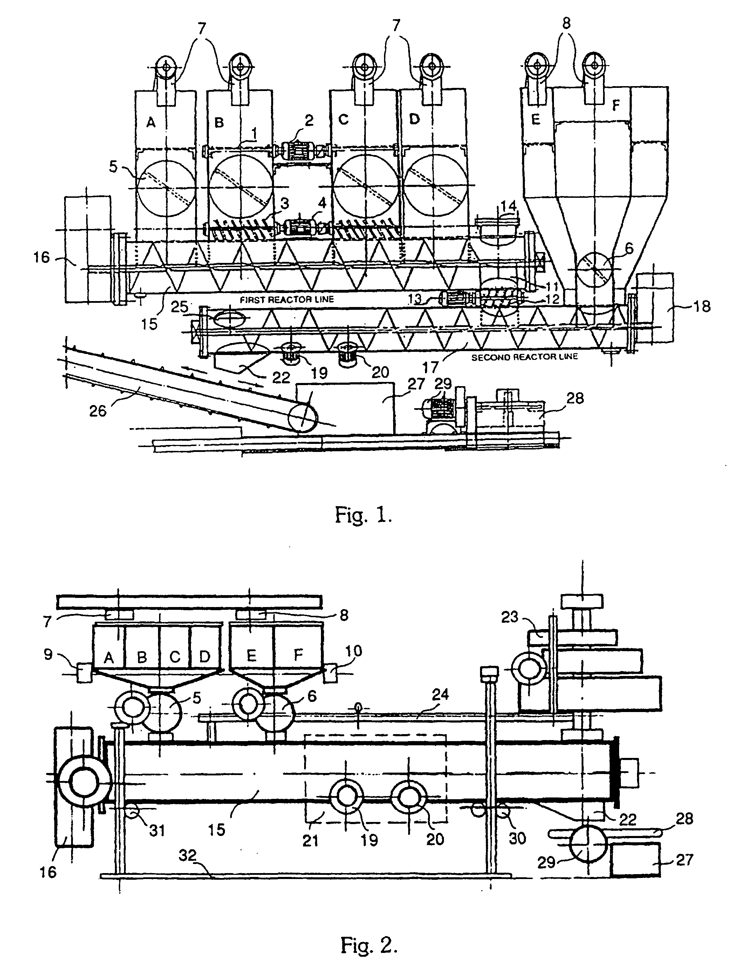

Such a plant for preparation and treatment of industrial-communal wastes according to the invention is shown in Figures 1 and 2. The plant components are marked with the following letters and numbers:

A - Waste hold
B - Waste hold
C - Waste hold
D - Waste hold
E - Additives hold
F - Additives hold
1- Vibrator grills
2 - Vibrator-grill motor
3 - Waste vortex unit
4 - Waste-vortex unit motor
5 - Waste doser
6 - Additive doser
7 - Waste intake canal
8 - Additive intake canal
9 - Pre-dosing waste mixer
10 - Pre-dosing additive mixer
11 - Interreactor pipe extension
12 - lnterreactor vortex unit
13 - Interreactor-vortex unit motor
14 - Sampling for analysis
15 - First reactor line
16 - Motor - gear box - variator
17 - Second rector line
18 - Motor - gear box - variator
19 - Eddying "+" vacuum-incapsulator
20 - Eddying "-" vacuum-incapsulator
21 - Vacuum depth control level
22 - Solidificate outlet
23 - Filter column
24 - Return duct steam - condensate
25 - Steam outlet
26 - Belt conveyor
27 - Solidificate container
28 - Solidificate press
29 - Press motor
30 - Reactor position stabiliser
31 - Reactor position inclinator
32 - Main and auxiliary base

Plant parts not shown in Figures 1 and 2 are: belt conveyor for solid materials to be treated, pumps for dosing of liquids, additives silos and electro-controls panel.

Herebelow will be shown functioning of the plant with various toxic and special waste sorts and mixtures (ashes, purifier silts, oils, inorganic impurities of organic wastes, asbestos wastes, dioxin, pesticides and heavy metal polluted soils, etc.).

Some sorts of wastes contain particularly dangerous matters and substances, strictly regulated by laws and whose maximum concentration is strictly regulated, limited to very small allowed participation in the total quantity, such as PCB, PCT, heavy metals, phenols, hydrocarbons, sulphur compounds, chlorine and nitrogen compounds, etc.

Correct technological process conducting, and especially with programmed plant functions, according to the invention, enables treatment of all sorts of wastes, even those containing the above mentioned noxious matters, that are brought within the allowed concentrations, eventually to be verified by laboratory analyses of steam, solidificate output, eluate, filer sediments or briquetted solidificates. Before the treatment, each waste is analysed for its content and elements and compounds are established, the following analysis data being important for the treatment:

-    moisture content,
-    total hydrocarbons content,
-    halogen, PCB, PCT, etc. content

- nitrogen compounds and phosphorus
- sulphur compounds content,
- heavy metal content,
- pH
- physical properties of the materials

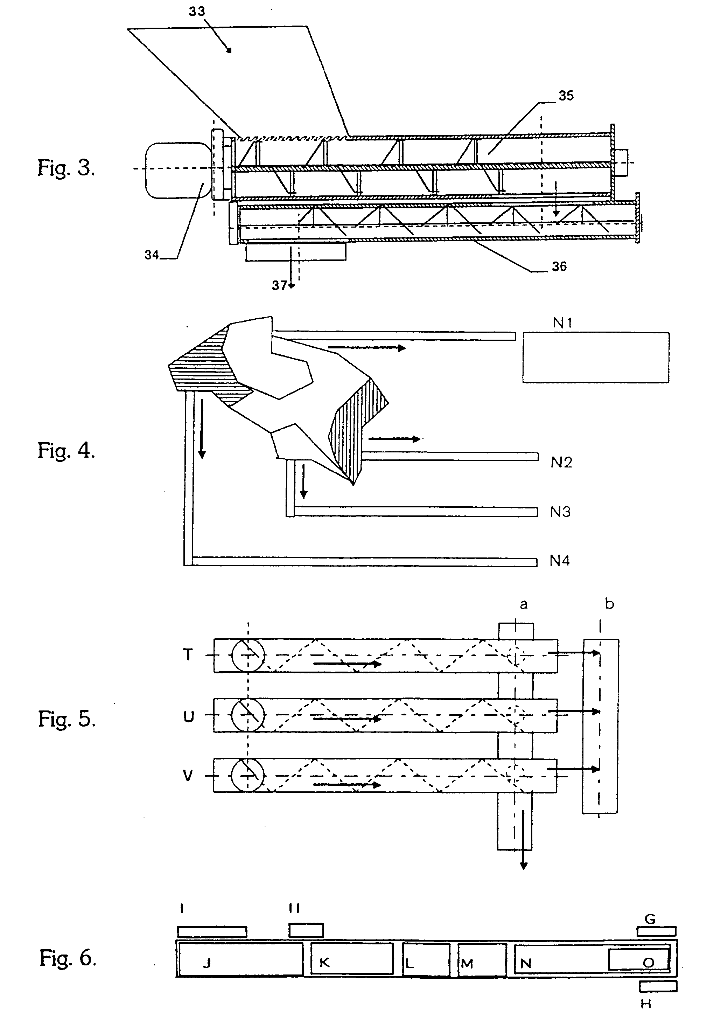

The technological process, according to the invention, applicable to almost all presently known wastes, including special wastes, satisfying the technical-technological prerequisites of vacuum-gas incapsulation which is the basic principle of solidification of the charge, has the physical-chemical course of process as shown in Figure 6.

The Figure 6 presentats the reactor unit where the process takes place, the marks used there having the following meanings:

I - Input of material to be treated,
II - Input of the process additives,
J - Flow of the material to be treated,
K - Flow of the basic and added materials,
L - Creating of conditions for the physical-chemical treatment,
M - Vacuum-gas incapsulation of the entire content,
N - Solidification of the entire charge,
O - Final part of the process and obtaining of the solidification products,
G - Steam outlet:

- returned into the process with or without condensation;
- with water washing and filtering,

H - Solidificates outlet as:

- dry powder;
- semi-dry to wet material planned for external process;
- material intended for pressing, and
- for further exploitation.

All matters and substances of the C-H chemical structure are based on petroleum. Petroleum, petroleum products and wastes based on hydrocarbons in refineries being very well known, they will not be explained here in all details but only in such details and properties that are of primary importance for the invention.

The C:H proportion in petroleum is 6:8, other possibly present elements participating with less than 5% → oxygen ($O^2$) II; sulphur (S) II, IV, VI; nitrogen (N) I, II, III, IV, V. Physical-chemical properties of hydrocarbon compounds with these elements are similar to those of pure hydrocarbons. Oils usually contain alkane (paraffin), naphthene (cyclo-paraffin) and aromatic (aliphatic) hydrocarbons, alkene (olein) hydrocarbons being rather rare, and alkyne (acetylene) hydrocarbons not being present in petroleum.

Petroleum hydrocarbons are classified as: paraffins, naphthenes and aromatics, and they make part of all presently known wastes, in various forms and quantities, especially of industrial wastes. Sulphur, nitrogen and oxygen compounds in petroleum significantly affect sorts, properties and characteristics of future industrial wastes.

The content of linked sulphur in petroleum is variable, depending on its origin, and amounts to >7% by weight.

Particularly characteristic sulphur compounds in petroleum are:

- alchil thiols
- mercaptanes
- alchil sulphides
- cyclic sulphides
- straight-chain (primary) thiols and sulphides
- thiocyclopentanes
- thiocyclohexanes
- polycyclic sulphur compounds.

Besides being contained in hydrogen sulphide ($H_2S$), inorganic sulphur may be present in petroleums as free (S°), as well.

Sulphur in petroleum acts as a catalytic poison.

Burning of sulphur-containing petroleum products produces acidulous and poisonous sulphur(IV)-oxide, of unpleasant smell and intensive corrosive effect.

The nitrogen (N) content is usually 0.05 - 1.0 % by weight.

Traces of metals in petroleum are common, appearing therefore also in the processing, consuming and waste system.

Ash residues after burning of petroleum amount up to 0.08 % by weight.

A part of the mineral contents is present in the emulgated water phase, the other being dissolved in the oil phase. Dry petroleum contains metals boron (B), magnesium (Mg), silicon (Si), iron (Fe), copper (Cu), nickel (Ni) and vanadium (V); wet petroleum contains sodium (Na) and strontium (Sr); whereas ash contains tellurium (Te), barium (Ba), lead (Pb), manganese (Mn), chromium (Cr) and silver (Ag).

The largest sources of waste hydrocarbons are petroleum refinery processes: production of heating oil and fuels, alkylation with sulphuric acid, polymerisation of propene and butane mixture with phosphoric acid, high-temperature isomerisation, production of lubricant oils, rectification, pipe distillation, boiling distillation, coking, catalytic cracking, reforming, refinery hydrogenation, hydrodesulphurisation of petrol, oil bleaching by hydration, distillation residues indirect desulphurisation, etc.

Every raw petroleum and every refinery process and technological treatment has its residues that can be neither further refined nor utilised, and these unavoidably become refinery wastes. Such wastes are known by various names: gudron, gudron clay, oiled sediment, filter cake, silt, gravity residue, centrifuge residue, desoxidans residue after cleaning process, acid residue, acid oil waste, refinery mud, fat sediment, tar, gatch, oiled water, etc.

Quantities of wastes originating from refinery treatments are relatively large compared to the processed petroleum, making a significant part of industrial wastes.

Petrol fraction makes the largest part of petroleum products, and is being separated by purposes: special fuels, engine petrol, aeroplane petrol, jet fuels, heavy petrol, kerosene, lamp kerosene, diesel fuels, heating oil, oils (engine, aeroplane, turbine, insulation, hydraulic, metal processing, medical, etc.), antifraction and protection greases, bitumens, petroleum wax as heavy fraction crystallisate, petrol-coke (thermal cracking of distillation and secondary process residues).

In thermal cracking reactions, where gas oils are being turned into alkenes and lighter alkynes whose boiling points are within the limits of gas, petrol and gas oil boiling points, there occur breaking of the alikil-aromate compound side-chains. Thus appear alkens and naphthen, aromatic compounds with shorter side-chains. Alkens condensate into compounds of larger molecules and cycle into napthenes and condensed-ring naphthenes.

They make often content of industrial wastes, subjectable to very successful technological treatment in line with this invention.

Organic contents based on carbon as the material structure bearer are the most important and most widespread forms of chemical condition of a large number of materials in the human environment and urban waste materials in general, which is why they are mentioned here, because they make base of the technological treatment of wastes by this invention.

Implementation of technological treatment of wastes by this invention consists of the following stages:

Stage I: Pre-preparation of wastes that will not be treated by this technological process

- separation of bulky wastes, engine parts, household appliances, car bodies, larger wooden, rubber, plastic and glass products, car batteries, engines, electronics, etc.

Stage II: Sorting of materials into groups by sort, density and granulation levelling

- materials are being sorted into groups in accordance with their chemical analyses, states of matter and technical properties, going for their uniformity or maximum likeness by sort, density and granulation, which is achieved by building machines, pumps and belt conveyors;
- materials are subjected to the granulation levelling process, according to the doser hold sieve, by grinding, fragmenting or pressing, where various sorts of materials may be present;
- materials are taken into auxiliary facilities in order of the highest homogenisation degree, aimed to making the treatment mixture physical-chemical and mechanical properties as like as possible, which is achieved by intermittent adding of liquid and solid sorts.

Stage III: Storing of basic and additional materials in holds with dosers

- materials that are to be dosed into the first reactor line (wastes and their mixtures to be processed) are sorted by the places of their storing in the hold, where the front holds are intended for liquid sorts and the subsequent for pasty materials and solids;

- uniform materials are entered into the unique hold and, this way, into the first reactor line, and mixed materials are sorted into holds by density and granulation.

Stage IV: Preparation of basic and additional materials mixture in the first reactor line

- upon entering the basic and the additional materials into the first reactor line, there are created conditions for obtaining uniform waste mixture, and the final mixture is subjected to the aimed technological treatment;
- the first reactor line speed depends on the mixture density, the material viscosity is smaller, the rotation of the motor is larger and vice-versa.

Stage V: Mixture vacuum-gas incapsulation process in the second reactor line

- the second reactor line speed depends on the degree of preparation of material for a faster or a slower exothermic reaction process, which is established based on the material humidity, particles dissociation and incapsulation in the reactor space, and the quantity of calcium based additives, steam evaporation degree and the process capacity;
- in the beginning of the second reactor line work, there is established minimum quantity of calcium based additives, because of the solidificate technological properties, the final product's lowest possible pH, the least possible leaving of calcium particles with steam into the filtering system and, finally, for economy reasons;
- calcium oxide and calcium hydroxide additives proportions are defined in accordance with the processed material chemical contents and humidity; the higher the content of phosphor, sulphur, chlorine, hydrocarbon and water in the mixture, the higher is the content of calcium hydroxide additive as compared to calcium oxide.

Stage VI: Treating the obtained product - the solidificate

- ready solidificate exits through the second reactor line opening onto the belt conveyor that transports it as powder into a container or presses it into bricks and transports it to the final storing place.

The above mentioned stages will be described in further detail by a particular example of treatment of one of the most often sorts of industrial-communal wastes and mixtures, usually appearing as its most widespread content and form.

The first stage of waste treatment preparations is establishing the waste initial quantities and properties and selection of the material that will not be treated by this technological treatment such as: bulky wastes, engine parts, household appliances, car bodies, larger wooden, rubber, plastic and glass products, car batteries, engines, electronics, etc.

Such states usually make recycling raws for further industrial treatment and usually makes about 15% of the total waste weight.

The rest of the material makes the future mixture for treatment by this invention, to be prepared and distributed for treatment in accordance with differences in content, granulation, humidity, physical-chemical properties and characteristics.

Some already separated and concentrated materials, that appear especially with industrial dumping sites, such as silts and oiled water, sediments and suspensions, solvents and oils, are subjected to chemical analysis for establishing the chemical content, especially of the following important contents: total content of hydrocarbons and halogen, phosphor, chlorine compounds, PCB, PCT, CN-compounds, mercury, mineral acids, heavy metals, nitro-compounds, sulphur and water.

A PRACTICAL EXAMPLE OF INVENTION APPLICATION

As a practical example of the invention application, there will be described in further detail an example of the most often type of industrial-communal dumping sites, consisting of:

- mixture of waste-water separator and purifier silts, mud and soil,
- furnace, electrofilter and incinerator ashes,
- oiled wastes mixed with organic and inorganic sorts,
- various communal wastes of a developed urban community,
- building wastes.

By analysing the site, the following relations and quantities are established:

- Silts, muds, oiled materials content make about 35% vol. of the total hydrocarbons, about 50% vol. of humidity, about 10% vol. of the total sulphur, halogen, nitro-compounds and heavy metals, and about 5% vol. of other contents of lower concentrations; making a part of phosphor there is also present paration: 0,0-dietil-0(-4 nitrophenil) tiophosphat, as a monotiophosphate acid derivative.
  Silt material is relatively homogenous, but also polluted with other matters, making about 25% vol. of the dumping site.
- Furnace, electrofilter and incinerator ashes contain ≈ 75% weight of inorganic matters and heavy-metal oxides (Fe, Mn), ≈ 10% weight of carbons, calcium phosphate and magnesium, and ≈ 15% weight of humidity.
  This material is accumulated mixed with silts and various building wastes, making about 20% vol. of the site.
- Building wastes contains, besides about 35% weight of humidity, also the usual contents of alkalis, magnesium, silicon, sulphur and ash, as well as certain quantity of iron object such as oval profile reinforcement irons of various dimensions.
  This material is dumped with other communal wastes, making about 15% vol. of the site.
- oiled soil contains about 30% weight of humidity, 5% weight of total hydrocarbons, and about 65% weight of other solid paint, varnish, grease and similar residues.
  Polluted soil is mixed with communal wastes, making about 15% of the site.
- Communal waste contains ≈ 10% weight of paper, ≈ 9% weight of plastics, ≈ 5% weight of glass, ≈ 5% weight of rubber, leather, fabrics and metal, ≈ 30% weight of biological waste, ≈ 30% weight of humidity and ≈ 10% weight of various bulky wastes.
  This material is mixed with oiled soil, sand and various litters, making about 25% vol. of the site.

The dumping site is entered with building mechanisation, grinders, fragmenters, loaders, excavators and pumps (screw and membrane), containers and belt conveyors, and the following materials are pre-treated:

| 1.1 | silts and soil | **A1** | 2.2 | ashes and silts | **B2** |
|-----|----------------|--------|-----|-----------------|--------|
| 1.2 | oils and ashes | **A2** | 3.1 | ashes and soil | **C1** |
| 2.1 | communal wastes | **B1** | 3.2 | remaining wastes | **C2** |

The separated materials, that underwent the preparation line treatment in the treatment preparation stage (six types of mixtures), is finally made into three characteristic groups of treatment materials: A3, B3 and C3.

Such mixture is passed through the preparation line consisting of three mixers, and through the first reactor line 15 from the holds A, B, C or D, where technical-technological parameters such as first and second reactor line speeds, dosing of treatment material, dosing of calcium oxide and calcium hydroxide, solidificate belt conveyor speed or solidificate press, are adjusted, whereby independent running of the material treatment technological process is commenced.

Mixture A3 mostly consists of silts and soil (A1), and oils and ashes (A2). Their parts are determined according to the invention, and according to the here presented content description and the previously presented explanations on creation of such materials in the chapter Disclosure of Invention, these relations are set as follows:

| Silt / soil | 30-45 / 55-70; average 37.5 : 62.5 or 1.0 : 1.7 |
|-------------|-------------------------------------------------|
| Oils / ash | 60-75 / 25-40; average 67.5 : 32.5 or 1.0 : 0.5 |

Mixture B3 mostly consists of communal wastes (B1), and ashes and silts (B2), and their parts are determined as follows:

| Communal waste (mixed) | 100 |
|------------------------|-----|
| Ash : silt | 35-45 : 55-65; average 40.0 : 60.0 or 0.7 : 1.0 |

Mixture C3 mostly consists of ash and soil (C1), and remaining wastes (C2), their relations being determined as follows:

| Ash : soil | 45-55 : 45-55; average 50.0 : 50.0 or 1.0 : 1.0 |
|------------|-------------------------------------------------|
| Remaining wastes (mixed) | 100 |

Mixtures A3, B3 and C3 are let into the three preparation liens, as shown in Fig. 5, to be dosed into the first reactor line 15 as a uniform mixture for treatment in the second reactor line 17, Fig. 1 and 2.

In accordance with the above established waste present contents and sorts, and by their pre-preparation, it is finally obtained the treatment mixture of the following contents:

line A3 - silt, soil, oiled water, ash
line B3 - communal waste, ash, silt
line C3 - ash, soil, remaining wastes (building debris, mud, etc.)

Their proportions produce a uniform mixture for treatment in the first and the second reactor lines:

Organic matter: 5-6 mg/kg; organic volatiles: 4-5 mg/kg; phosphor compounds: 1-2 mg/kg; mineral oils: 15-16 mg/kg; moisture: 13-20%.
Heavy metals in eluate: iron: 15-20 mg/l; zinc: 0.5-1.0 mg/l; aluminium: 5-6 mg/l; manganese: 2-3 mg/l; other metals: 0.5-1 mg/l (Cr, As, Cu, Mo, Pb, Se, Hg, Te, Ti, Be).

Technical-technological characteristics of the first and the second reactor lines are adjusted according to the following principles:

- Humidity 13-20% weight corresponds to normal solidification conditions with the basic additive of about 5-15% vol. of CaO (calcium oxide) and additional additive of about 2-5% of $Ca(OH)_2$ (calcium hydroxide).
- Presence of phosphor compounds will tend to too high temperatures in the second reactor line, to be alleviated in this case by increasing the $Ca(OH)_2$ content to > 7% vol., and, for the safety sake, dosing is set to = 8%.
- Mineral oils, making 15-16 mg/kg, will require the treated material flow, with reactor drum $D_u = \varnothing$ 486 mm, at 1.25 kg/s (4.5 $m^3$/h).
- Mineral oils and substances content, making one third of the content, influence determining the final process speed, which, as calculated, is finally by $\approx$ 25% higher, or the required flow, which is $\approx$ 1.5 kg/s (5.5 $m^3$/h).
- CaO based additives, $\approx$ 10% vol., make an exemplary part of this reactant for obtaining the exothermic temperature of 115-120°C, whereas a $Ca(OH)_2$ of $\approx$ 8% vol. will favourably influence lowering the process too high temperatures.

This way, the following process technical-technological parameters and characteristics will be achieved, to satisfy the conditions required for obtaining the aimed solidificate quality and adequate water steam quality and quantity:

| Process material quantity | 5.50 $m^3$/h | Solidificate density | 0.95-0.97 kg/$dm^3$ |
|---|---|---|---|
| Process additives quantity | 0.99 $m^3$/h | Water steam quantity | 6.6-9.6 N$m^3$/h |
| Process mean temperature | 110°C | Powdered solidificate quantity | 5.84 $m^3$/h |

Incapsul. operat. press.: 1.02-1.21 MPa Bricketted solidificate quantity: 2.33 $m^3$/h

The first solidificate analysis will show the following approximate and average results:

| | Wastes | Solidificate eluate |
|---|---|---|
| Organic substance, total | 5.79 mg/kg | 2.12 |
| Organic volatiles, total | 4.075 mg/kg | 584 |
| Phosphor | 1.6 mg/kg | 1.06 |
| Mineral oils | 16.4 mg/kg | 6.0 |
| Humidity | 13 % | 5.3 |
| pH | 6.8 | 12.3 |
| Iron - eluate, Fe | 56 mg/l Fe | 0.07 |
| Chrome - eluate, Cr | 0.040 mg/l Cr | 0.085 |
| Manganese - eluate, Mn | 2.5 mg/l Mn | 0.16 |
| Cadmium - eluate, Cd | 0.003 mg/l Cd | 0.003 |
| Zinc - eluate, Zn | 0.340 mg/l Zn | 0.05 |
| Aluminium - eluate, Al | 9.5 mg/l Al | 3.27 |
| Arsenic - eluate, As | < 0.002 mg/l As | < 0.002 |
| Copper - eluate, Cu | < 0.002 mg/l Cu | < 0.002 |

(continued)

|  | Wastes | Solidificate eluate |
|---|---|---|
| Molibden - eluate, Mo | 0.10 mg/l Mo | 0.15 |
| Lead - eluate, Pb | 0.02 mg/l Pb | < 0.002 |
| Selenium - eluate, Se | < 0.002 mg/l Se | < 0.002 |
| Mercury - eluate, Hg | < 0.001 mg/l Hg | < 0.001 |
| Tellurium - eluate, Te | <0.030 mg/l Te | < 0.030 |
| Titanium - eluate, Ti | < 0.002 mg/l Ti | < 0.002 |
| Beryllium - eluate, Be | < 0.001 mg/l Be | < 0.001 |
| Process verification and correction: | | |
| Mineral oils | from 16.4 to 6.0 | required: 5.0 |
| pH | from 6.8 to 12.3 | required: 9.5 |

The process correction, due to exceeded maximum allowed quantities (mineral oils and pH) is achieved by decreasing the waste flow speed, and by increasing the $Ca(OH)_2$ based additives. In order to decrease the content of mineral oils in eluate at the release, the processing volume should be decreased at least by the "$\bar{\omega}$" factor, which is to be calculated according to experience.

The required correction is calculated as follows:

$$\bar{\omega} = \frac{\text{final mineral oil content}}{\text{initial mineral oil content}} \text{ x (water vol. \%) x } \frac{f_2}{f_1} \frac{1.0}{1.3} = 6.0/16.4 \times 0.13 \times 0.77 = 0.037$$

The final material flow speed should due to the "$\bar{\omega}$" factor be by 3.7% lower, and the processing capacity is to be corrected from 5.5 m$^3$/h (1.53 l/s) to 5.3 m$^3$/h (1.47 l/s).

If the eluate pH is 9-10, and mineral oils make < 5 mg/kg, the processing capacity could be increased gradually in 0.05 l/s increments, up to the aimed solidificate quality. The calcium additives increase is limited to the proportion wich the process started with (max. 18% vol.) as related to the processing material.

Dark coloured water after mixing of solidificates in it would mean possible presence of mineral oils surplus which failed to encapsulate. Hydrocarbons that encapsulate with more difficulty are usually acyclic, aromatic and those with higher phenol contents. When PCB is present in the treated material there occur satisfactory chlorine incapsulation, but the phenol content in the solidificate increases, although there was none before (because of dissociation of polychlorinated biphenyls to phenol and chlorine parts).

It is almost always necessary to pre-prepare the material almost always or most often present at industrial-communal dumping sites.

With this invention, this sort of pre-treatment is particularly important, because it secures solidification of the entire material and produces the required solidificate quality in terms of purity, hydrophobia, compressibility and further industrial utilisation.

Wastes containing matters of various solidity, of pasty or semipasty state, such as oiled soil and various cemented materials of uneven content (clay, mud, pain and varnish wastes, mixtures of dust and sands with solvents, oiled water, silts, etc.) are taken through auxiliary facility for waste pre-preparation that will grind, mix, loose and make them as homogenous as possible and will take them to the output, i.e. the intake into the first reactor line.

The pre-preparation facility is presented in Fig. 3. It produces the waste mixture that will be put into the first reactor line 15, enabling its final treatment in the second reactor line 17.

In the Fig. 3, particular parts and segments are marked as follows:

33 - Intake hopper
34 - Motor-variator
35 - Grinding and loosening
36 - Prepared material transporting line
37 - Outlet for material prepared for treatment

If there is a larger number of different mixtures, each of them will be transported through the auxiliary facility for pre-preparation and will be stored in holds A, B, C and D above the first reactor line, from where it will be taken for treatment by means of a flow regulating butterfly valve.

It is practical to have three lines for waste pre-preparation lines, because some mixtures may develop unwanted gases or strong reaction when in contact, therefore requiring separation.

The first reactor line 15, Figs. 1 and 2, has its own drive 16, defining the powering conditions as well as the final intaken material processing capacity. The same is about the second reaction line 17 because of different speeds of the two lines.

The second reactor line 17 is the final material treatment operation, with its own process technology and treatment speed and capacity.

The difference in capacity results from the volume of the first reactor line increasing up to > 20% as compared to the first, under powering conditions perfectly different than the first one.

The rest of the material intended for treatment by this invention falls from belt conveyors into the pre-preparation hopper (Fig. 3), where it is homogenised by granulation, to be transported by worm transporters to particular material holds and the flow regulation butterfly valves let into the first reactor line.

Calcium oxide and calcium hydroxide are transported by worm transporters from their additive silos over the first reactor line, or are taken directly into the second reactor line by flexible doser.

After undergoing the pre-preparation, material from the first reactor line is let through a closed transport system into the second reactor line, where the final processing is exercised.

The pre-preparation and the pre-treatment consist of the following operations:

- separation from accumulation of the material not adequate for processing by this invention (bulky wastes, large parts, appliances, machines, car batteries, motors, iron, steel ropes, etc.), which is to undergo other treatments (e.g., dismantling and utilisation of raws);
- separation from accumulation of the material that is fragmented, pressed and grinded by auxiliary facilities to granulation adequate for treatment by this invention (glass, rubber, plastics, paper, leather, fabrics, wood chips, etc.), processed by mills, fragmenters and grinders, and taken by belt conveyors to the pre-treatment line;
- separation from accumulation of the material that is relatively homogenous (ashes, silts, scrapings, dust, oils, fragmented organic wastes, oiled water, greases, etc.), to be taken by belt or worm transporters, or even pumps, directly to the pre-treatment line or, by an adequate connection to the second reactor line, directly to the final treatment.

Separated and fragmented, they (fragmented rubber, glass, wood, paper, plastics, etc.) are taken into the pre-treatment line as material prepared for processing by this invention, and into the first reactor line holds.

From a larger number of holds A, B, C and D, materials are dosed into the first reactor line 15 (Figs. 1 and 2) in a certain proportion, by mans of flow control butterfly valves.

One of the most often examples, and which is described in this registration, with three pre-preparation lines, requires, in the final treatment, the following proportions of parts for a well conducted technological process in plant constructed by this invention:

$$A3 : B3 : C3 = 1.0 : 1.4 : 1.6$$

A3: (silt + soil); (oiled water + ash)     - about 25% vol. of the contents
B3: (mixed communal wastes); (ash + silt)     - about 35% vol. of the contents
C3: (ash + soil); (remaining wastes)     - about 40% vol. of the contents

Such proportions are achieved by the speed of dosing from pre-treatment lines into the first reactor line holds, adjustable by motor-gear-variators and their belt or gear transmissions from one line to another.

The treatment mixture will in such case have contents of the above proportions, whereby the conditions for a well conducted process with additives based on $Ca^{2+}$ (8% vol. $Ca(OH)_2$ + 10% vol. CaO) are achieved.

Special additives based on conditionally clean liquids and matters (used oils, greases, gatch, gudron, black lye, tank and separator sediments, oils, lubricants and resins, etc.) are transported directly into one of the first reactor line holds as separate material. The same procedure is performed for other solid matters as well (sands, powders, medicines, dried wastes, paints and varnishes, milled rubber, glass, etc.).

For better reference, Fig. 4 presents the principle of this separation, particular separations being for the following materials:

| N1 | Bulky wastes | N3 | B3 material preparation line |
|---|---|---|---|
| N2 | A3 material preparation line | N4 | C3 material preparation line |

Preparation line, as shown in Fig. 3, is presented with two or more worm transporters, mixers, cutters and looseners, that harmonise the mixture content and prepare it for storing in the first reactor line holds, whereby it is marked:

T - Cutters, grinder and mixers (communal wastes)
U - Fragmenters, cutters and mixers (soil, other wastes)
V - Mixers, translators (ash, silt and oils)

Vertical transporters marked with a) and b) are worm or belt conveyors that mix the fragmented material as a mixture or as separate sorts, depending on the waste sort.

More important technical details related to functions of the particular plant parts of particular importance in exercising the technological process under this invention are:

a) Filter

It is located next to the treatment plant and is connected with pipes to the opening 25 (Fig. 1) at the end of the second reactor line, material entering first into labyrinth with water nozzles and then into the comb and bag filter. This way, water steam is purified and enters freely into the atmosphere, and water used for particle washing circulates constantly from its vessel next to the labyrinth nozzles, so that through it pass gases on the way to comb-filter purifying.

The steam that, driven by the radial ventilator, enters the purifying pipe on the way to the comb and bag filter, is still technologically useful for the process (gaseous sulphur compounds, sulphur dioxide, sulphites and sulphides, calcium particles, etc., which escaped the encapsulation phase in the process).

Therefore, at the forced-flow steam pipe outlet, there is fit a pipe connection that makes a bridge with the pipe extension 11 below the material vortex unit 12 for letting it into the second reactor line 17, where steam helps mixing and entering the material with increased turbulence and mixing with the remaining non-encapsulated particles and gaseous contents.

A steam jet is directed forward, in the material flow direction, in order to prevent a return reaction with calcium additives and choking of the mixture in the second reactor line space.

b) Vibrating grill

This grill 1 (Fig. 1) prevents entrance of larger pieces of the material, especially of larger pieces of metal, steel ropes, ropes, rags, pieces of wood, etc. Ropes, sheet metal and fabrics can be caught by the mixer-translator mobile spiral and can stop the plant. Rocks, even larger, are not harmful and will defragmentate partly in the first and certainly in the second reactor line, to be encapsulated in powder as a constituent part of the solidificate, Input material control is located in the pre-preparation processes, and the grill is a protection against passage of materials that could obstacle the treatment.

If some larger materials fall to the vibrating grill 1, it is to be cleaned from time to time by removing the pieces accumulated on it into a special hold for grinding. The grill vibrations help the material that can pass through not to get stuck and accumulate on the grill.

c) Vortex unit

At the bottom of particular material holds B and C, there are located vortex units 3 (Fig. 1) that are to turn over and direct the material to the first reactor line 15, which is achieved by bent blades. The blades are fit to the shaft at distances, like interrupted blades of a worm transporter.

The blades are to rotate in the direction of pushing the material forward, i.e. toward the exit from the second reactor line 17. This is important for the process and for establishing contacts with calcium additives at about the middle of its length where, in exothermic conditions, runs the process of dissociation and degassing at the TTT-balance of status.

Here, temperature is the highest: about 100-125°C.

d) Incapsulation space

Incapsulator motors 19 and 20 (Figs. 1 and 2), which create vacuum between their blades and where the incapsulation starts, have two rotation speeds (2-pole motors). Viscous sorts of materials use the lower speed (800 rpm), and solid ones the higher (1400 rpm). These two speeds satisfy both conditions. Between the two incapsulator motors there is interactive space where materials from both sides accumulate making solid partitions that totally surround the incapsulation space.

In this space occur molecular microexplosions as one of the most important functions of a complete incapsulation, so the better the conditions the more complete the incapsulation. Water steam goes to both sides of this space, forming layers which in high temperature and inner pressure conditions expand to explosion, which tends to returning back and pushing forwards, as the force of the coming material pushes the process forward, making the solidification to have the resulting character of forward motion, towards the reactor exit.

Directions of motor rotation can be set to any of the two sides, the most often case being the blades to move forward (towards the solidificate exit) or, with liquid mixtures, one towards the other. When viscous and very viscous materials are being treated, the last motor rotates backwards (opposite to the material direction), slowing the material motion down and increasing the contact surface with calcium particles in incapsulation conditions.

e) Motors-gears-variators 16 and 18 (Figs. 1 and 2)

Along the reactor lines, the material is being transported by worms on the reactor motor shaft. The faster they move, the lesser is the accumulation of material in spaces between the worm blades, and the speed of material transportation is higher. This, also, frees the part of reactor space necessary for creation of steam layers in which the incapsulation occurs.

The processing capacity depends on dosing of the material, controlled by butterfly valves 5 and 6 (Fig. 1) or let directly into the second reactor line for processing.

More viscous materials will have lesser processing capacity, and dry charges and solids higher. At dosing viscous materials, the best accumulation of material in the worms is 30%, with solids over 50%.

Rotation speed is controlled by changing the number of revolutions of the reactor lines 15 and 17 shafts; it is therefore more favourable a variator which has wider choice of rotation speeds (e.g. 2-70 rpm). This is even more important with the second reactor line because here run the final parts of the process and the possibility of rotation regulation is of even greater importance; here, therefore, are more favourable variators of still higher scope (e.g. 2-120 rpm).

f) Solidificate output

After making its way from the incapsulation space, through the barrier, solidificate will fall through the opening 22 to the belt conveyor 26 (Figs. 1 and 2).

Solidificate is directed forward for loading onto transport facility or in container, or backward for pressing as briquettes.

It is important to establish compressibility of the solidificate as a physical property important for determining the possible pressing force.

Liquid hydrocarbon solidificates are compressible to $\approx$ 1/3 of the initial volume, whereas dominantly organic waste solidificates have lesser compressibility (to $\approx$ 1/2 of the initial volume) with the same pressing force.

The maximum pressing is deemed to be the one where no oil drips from the solidificate, these pressures being 10-15 MPa.

At pressures above 20 MPa occurs dripping ("sweating").

When leaving the reactor, the solidificate temperature is increased to about 100-135°C. Even higher temperatures occur with wastes containing phosphor compounds or mineral acids of higher concentrations and higher water contents.

Powder solidificate cools very slowly when accumulated to over 500 mm, 32-40°C daily. When loosened (such as on belt conveyor), it cools faster (50-60°C daily), and to be made into briquettes, it is to be cooled down to about 45°C.

Solidificate temperatures above 135°C at the reactor exit are technologically unfavourable and their occurrence is prevented by changing dosing proportions of particular wastes: by increasing calcium hydroxide $Ca(OH)_2$ and decreasing calcium oxide CaO contents, or by changing the material flow speed. The maximum technological temperature for safe running of the process in the second reactor line is deemed to be about 140°C.

7. BRIEF DESCRIPTION OF INVENTION APPLICATION

The term "communal wastes" means a group of wastes dumped by a social community on a certain place, subject to space and time limitations, supervision and control of the wastes, with intervention activities and prevention of soil, water and air pollution, and prevention of infections, degasation and taking fire.

There are often dumpings of "non-communal" wastes such as expired medicines, medical preparations and pharmacological products, solid and liquid synthetic materials, parts of surgery, solvents, motor oils, emulsions, thinners, paints and varnishes, lubricants, filtering system silts, ashes, etc., which requires a completely different treatment and organisation of such area and processing.

The basic assumptions on participation of particular wastes in the overall structure of the dumping site (e.g. paper 35%, glass 15%, plastics 7%, organic bio-waste 12%, etc.) can be taken as initial values and average expectations only, and not as reliable data for designing and sanitary improvement of some urban "communal" dumping site.

Dumping sites are loaded with other sorts of wastes, too, e.g. communal-industrial waste liquids such as emulsions, solvents and thinners, used motor oils, silts, paints and varnishes, oiled water, alcohols, acids, alkalis, artificial and synthetic liquids and suspensions, various glues, processing bilges, etc.

Communal waste treatment includes pre-preparation, selection and several operations aimed to separation of usable materials increasing, thus, the level of usability of recyclable raws and decreasing treatment by physical-chemical processes.

Existence of larger numbers of various bulky waste categories (wood, metal, glass, rubber, electric material, leather, fabrics, plastics, etc.) requires the same numbers of various dumping holds. A more efficient way of solving this problem in this stage is separating such bulky wastes at the very entrance.

According to this invention, the material selection technology is a separate process, where the selection comprises the following operations:

- separation of bulky wastes;
- separation of iron and steel, possibly by magnets, and of other ferrous and non-ferrous metals differing by shape (sheets, profiles, bottles) and specific weight (Al, Cr, Zn, Cu, brass, bronze, etc.), separated by special facilities at the selection line;
- separation of paper, wrapping paper, combined paper of more marked shapes and which reacts to moisturising and exhaustor suction;
- separation of plastics of certain shapes and weights, but with them also of certain sorts of glass of similar shapes and densities;
- separation of glass and glass pieces of larger dimensions;
- separation of rubber, fabrics, leather and wastes similar to these and separated by recognising specific weights and shapes;
- the rest, consisting mostly of organic, biologically decomposable materials, small residues of above mentioned materials, as well as of water, acids, alkalis, dust and ash, soil, mud and sand, silts and emulsions, solvents and suspensions, is transported by belt conveyor to the solidification plant where the entire mixture will undergo physical-chemical treatment and final pressing into solid blocks, plates and briquettes;
- blocks, pressed at $\approx$ 10-15 MPa pressures, are separated for transport and utilisation, so there is practically no residue in this communal waste selection technology.

The only "residue" is the evaporating part of the wastes (evaporating at the processing temperatures) and water steam created in the solidification plant, which are being filtered and, only after washing of gases and particles and purifying through comb and bag filters, let into the atmosphere, this in order to prevent unwanted effects to the nature and the environment.

Most of the selected materials: paper, plastics, glass, metal, wood, fabrics, leather, rubber, which makes $\approx$ 30-50% vol. of the waste, are to be only partly deemed as recyclable raws, because this part of the materials is only conditionally fit for further industrial utilisation, mostly because of dirts (paper) and mixtures (glass, plastics).

**Claims**

1. A process for preparation and treating of communal and industrial wastes into usable products, the process being performed in the following stages:

   I: Pre-preparation of wastes that will not be processed by this technological process such as separation of bulky wastes (engine parts, household appliances, car bodies, larger wooden, rubber, plastic and glass products, batteries, etc.);

   II: Sorting of materials into groups by sort, density and granulation, by sieve at a doser hold, by crushing, chopping or mashing and obtaining the basic waste mixture that is to be processed;

   III: Storing of basic material for processing by sort, density and granulation into holds (A), (B), (C) and (D) for their dosing into a first reactor line (15), and storing of calcium-oxide and calcium-hydroxide into holds (E) and (F) as process additives;

the process being **characterized by** the following stages:

IV: Preparation of basic and additional materials mixture that is loaded from the holds (A), (B), (C) and (D), through vibrating grills (1) and a doser (5), into the first reactor line (15) where, at the room temperature, the mixture is harmonised by physical-chemical properties and whose speed depends on the mixture density and material viscosity, the final mixture content to be subjected to the given technological process, such mixture to be loaded through a piping (11) and a whirling device (12) into a second reactor line (17);

V: Process of vacuum-gas encapsulation of the mixture that is loaded from the first reactor line (15) into the second reactor line (17) where, with added calcium based process additives from the holds (E) and (F), there occurs the exothermic reaction at temperatures 100-135°C and molecular micro-explosion, producing water steam, this causing intensive and very quick vacuum-gas encapsulation of the loaded mixture, continuing therefrom into whirling vacuum incapsulators (19) and (20) that create spaces in which appear complex anion microparticles that are positioned in the centre of new molecules of complex calcium compounds, creating balanced conditions and stability of new molecular sort as solidificates that, in the form of powder of density 950-975 kg/m$^3$ and temperature 80-105°C leave from a reactor through a discharge opening (22) onto a belt conveyor (26), as the process final product;

VI: Storing the obtained solidificate by cooling it at air at the rate of 28-33°C/day if heaped or of 35-38°C/day if loosened; after reaching the temperature of about 45°C, compressing it into briquettes sized 40 x 30 mm and of density 2380-2900 kg/m$^3$, thus, making it a waste that can be deposited at communal dumping sites; which solidificate in the form of powder, due to its ability to be pumped, may be transported by tank lorries for further use in civil engineering, power production or as special protection material for building technical barriers against influences of toxic, poisonous and radioactive materials.

2. A process, as claimed in the claim 1, wherein water steam, gaseous contents and particles are separated from the process into a purification filter system through water-, comb- and bag filters, and returned by piping into the space between the first and the second reactor lines, where, after condensation, they mix with inloaded materials, this decreasing steam outlet into the atmosphere.

3. A process, as claimed in the claims 1 or 2, wherein, by stages II to VI, all sorts of wastes can be processed, regardless of their state, sort, chemical content and physical-chemical properties, if it contains at least 5 % of hydrocarbons by volume, or if they are added to it, and if such prepared mixture is added calcium-oxide or calcium-hydroxide based additives, as the only process additives, for its processing in the second reactor line.

4. A plant for preparation and treating of communal and industrial wastes into usable products, intended for exercising the process described in claims 1, 2 or 3, consisting of a waste pre-preparation auxiliary plant and a waste treatment plant, wherein the pre-preparation auxiliary plant consists of an intake hopper (33), a material fragmentation and loosening line (35) and a transportation line (36); and wherein the treatment plant consists of waste holds (A), (B), (C) and (D), and process additive holds (E) and (F), waste dosers (5), additive dosers (6) and a belt conveyor (26), **characterized in that**
the pre-preparation auxiliary plant further consists of a motor variator (34) and that
the treatment plant further consists of vibrating grills (1), a waste whirling device (3), a first reactor line (15) with its own powering motor - gears - variator (16), a piping between the reactors (11), a whirling device between the reactors (12), a second reactor line (17) with own powering motor - gears - variator (18) containing the whirling "+" vacuum incapsulator (19) and the whirling "-" vacuum incapsulator (20) for vacuum-gas incapsulation, a filtering system (23) for purification of water steam and particals with condensate return ducts (24), at the second reactor line being steam outlets (25) and solidificate discharge (22) to the belt conveyor (26) with a solidificate container (27).

5. A plant, as claimed in the claim 4, wherein the first reactor line (15) and the second reactor line (17) have processing capacities that enable exact dosing of materials and regulation of its rotation speed, this assuring the required chemical balance to the process.

**Patentansprüche**

1. Verfahren zur Behandlung und Aufbereitung kommunaler und industrieller Abfälle zu verwertbaren Produkten, wobei das Verfahren in den folgenden Stufen durchgeführt wird:

I: Vorbereiten von Abfällen, die nicht nach diesem technologischen Verfahren verarbeitet werden, wie zum Beispiel Trennen sperriger Abfälle (Motorteile, Haushaltsgeräte, Autokarosserien, größere Produkte aus Holz, Gummi, Kunststoff und Glas, Batterien, etc.);

II : Sortieren von Materialien in Gruppen nach Sorte, Dichte und Körnung, durch Sieben in einem Dosierbehälter, durch Zerkleinern, Häckseln oder Zerstampfen, und Erhalten der Grundabfallmischung, die zu verarbeiten ist;

III: Lagern von Grundmaterial zur Verarbeitung nach Sorte, Dichte und Körnung in Behältern (A), (B), (C) und (D), um dieses in eine erste Reaktorstraße (15) zu dosieren, und Lagern von Calciumoxid und Calciumhydroxid als Verfahrenszusätze in Behältern (E) und (F);

wobei das Verfahren **gekennzeichnet ist durch** die folgenden Stufen:

IV: Aufbereitung der Grund- und Zusatzmaterialmischung, die von den Behältern (A), (B), (C) und (D) **durch** einen Schüttelrost (1) und eine Dosiervorrichtung (5) in die erste Reaktorstraße (15) geleitet wird, wo die Mischung bei Raumtemperatur nach ihren physikalisch-chemischen Eigenschaften harmonisiert wird und deren Geschwindigkeit von der Dichte der Mischung und der Viskosität des Materials sowie dem Endgehalt der dem jeweiligen technologischen Verfahren zu unterziehenden Mischung abhängt, wobei diese Mischung **durch** eine Rohrleitung (11) und eine Verwirbelungsvorrichtung (12) in eine zweite Reaktorstraße (17) geleitet wird;

V: Verfahren der Einkapselung der Mischung, die von der ersten Reaktorstraße (15) in die zweite Reaktorstraße (17) geleitet wird, in Vakuumgas unter Zugabe von Verfahrenszusätzen auf Calciumbasis aus den Behältern (E) und (F), wobei es zur exothermen Reaktion bei Temperaturen von 100-135°C und zur molekularen Mikroexplosion kommt, so dass Wasserdampf erzeugt wird, was zu einer intensiven und sehr schnellen Einkapselung der eingeleiteten Mischung in Vakuumgas führt, die von da weiter in verwirbelnde Vakuumverkapselungsvorrichtungen (19) und (20) geleitet wird, die Hohlräume erzeugen, in denen Mikropartikel aus Anionenkomplexen erscheinen, die in der Mitte neuer Moleküle komplexer Calciumverbindungen positioniert sind, was zu ausgewogenen Bedingungen und einer stabilen neuen Molekülsorte in Form von Solidifikaten führt, die als Endprodukt des Verfahrens in Form eines Pulvers mit einer Dichte von 950-975 kg/m$^3$ und einer Temperatur von 80-105°C einen Reaktor **durch** eine Austrittsöffnung (22) auf ein Förderband (26) verlassen;

VI: Lagern des erhaltenen Solidifikats unter Abkühlung an Luft mit einer Geschwindigkeit von 28-33°C/Tag, wenn es aufgehäuft ist, oder mit einer Geschwindigkeit von 35-38°C/Tag, wenn es lose ist; nach Erreichen der Temperatur von etwa 45°C wird es zu Briketts mit einer Größe von 40 x 30 mm und einer Dichte von 2380-2900 kg/m$^3$ komprimiert, so dass es zu einem Abfall wird, der auf einem kommunalen Müllabladeplatz abgelagert werden kann;

wobei dieses pulverförmige Solidifikat infolge seiner Eignung zum Pumpen zur weiteren Verwendung im Tiefbau, zur Energieerzeugung oder als spezielles Schutzmaterial für technische Gebäudeisolierungen gegen Einflüsse toxischer, giftiger und radioaktiver Materialien **durch** Tankfahrzeuge transportiert werden kann.

2. Verfahren nach Anspruch 1, bei dem Wasserdampf, Gasanteile und Partikel aus dem Verfahren durch Wasser-, Kamm- und Schlauchfilter in ein Reinigungsfiltersystem abgeschieden werden und durch eine Rohrleitung in den Raum zwischen der ersten und der zweiten Reaktorstraße zurückgeführt werden, wo sie sich nach Kondensation mit zugeführten Materialien mischen, was den Austritt von Dampf in die Atmosphäre vermindert.

3. Verfahren nach Anspruch 1 oder 2, bei dem in den Stufen II bis VI alle Abfallsorten unabhängig von Zustand, Sorte, Chemikaliengehalt und physikalisch-chemischen Eigenschaften verarbeitet werden können, wenn sie mindestens 5 Vol.-% Kohlenwasserstoffe enthalten oder wenn diese hinzugefügt werden, und wenn der so aufbereiteten Mischung Additive auf Basis von Calciumoxid oder Calciumhydroxid als die einzigen Verfahrenszusätze zur Verarbeitung in der zweiten Reaktorstraße zugesetzt werden.

4. Anlage zur Behandlung und Aufbereitung kommunaler und industrieller Abfälle zu verwertbaren Produkten, in der das in Anspruch 1, 2 oder 3 beschriebene Verfahren durchgeführt werden soll und die aus einer Hilfsanlage zur Abfallvorbereitung und einer Abfallbehandlungsanlage besteht, wobei die Hilfsanlage zur Abfallvorbereitung aus einem Einfülltrichter (33), einer Materialzerkleinerungs- und -lockerungsstraße (35) und einer Transportstraße (36) besteht; und wobei die Behandlungsanlage aus Abfallbehältern (A), (B), (C) und (D) und Verfahrenszusatzbehältern (E) und (F), Abfalldosiervorrichtungen (5), Additivdosiervorrichtungen (6) und einem Förderband (26) besteht, **dadurch gekennzeichnet, dass**

die Hilfsanlage zur Abfallvorbereitung ferner aus einem Motorvariator (34) besteht, und dass

die Behandlungsanlage ferner aus einem Schüttelrost (1), einer Abfallverwirbelungsvorrichtung (3), einer ersten Reaktorstraße (15) mit ihrem eigenen Variator (16) für Antriebsmotor und Getriebe, einer Rohrleitung (11) zwischen den Reaktoren, einer Verwirbelungsvorrichtung (12) zwischen den Reaktoren, einer zweiten Reaktorstraße (17) mit ihrem eigenen Variator (18) für Antriebsmotor und Getriebe, welche die verwirbelnde "+"-Vakuumverkapselungsvorrichtung (19) und die verwirbelnde "-"-Vakuumverkapselungsvorrichtung (20) zur Einkapselung in Vakuumgas enthält, und aus einem Filtersystem (23) zur Reinigung von Wasserdampf und Partikeln mit Kondensatrückführkanälen (24) besteht, wobei sich an der zweiten Reaktorstraße Dampfauslässe (25) und ein Solidifikatauslass (22) zu dem Förderband (26) mit einem Solidifikatbehälter (27) befinden.

**5.** Anlage nach Anspruch 4, bei der die erste Reaktorstraße (15) und die zweite Reaktorstraße (17) Verarbeitungskapazitäten haben, die eine genaue Dosierung von Materialien und eine Regulierung ihrer Drehzahl erlauben, so dass das erforderliche chemische Gleichgewicht des Verfahrens sichergestellt ist.

## Revendications

**1.** Procédé de préparation et de traitement des déchets communaux et industriels en produits utilisables, le procédé étant réalisé par les étapes suivantes :

I : une préparation préalable des déchets qui ne seront pas traités par ce procédé technologique, telle qu'une séparation des déchets massifs (pièces de moteur, accessoires ménagers, carrosseries de véhicules, grands éléments en bois, produits en caoutchouc, en matière plastique et en verre, piles, etc.) ;
II : un tri des matériaux en groupes par type, densité et granulation, par criblage sur un support doseur, par broyage, tranchage ou brassage et une obtention du mélange basique de déchets, qui sera traité ;
III : un stockage des matériaux de base pour le traitement par type, densité et granulation dans des supports (A), (B), (C) et (D) pour leur addition dans une première ligne de réacteur (15), et un stockage de l'oxyde de calcium et de l'hydroxyde de calcium dans des supports (E) et (F) comme additifs du procédé ;

le procédé étant **caractérisé par** les étapes suivantes :

IV : une préparation du mélange des matériaux de base et supplémentaires, qui est chargé depuis les supports (A), (B), (C) et (D), par des grilles vibrantes (1) et un doseur (5), dans la première ligne de réacteur (15), où, à température ambiante, le mélange est harmonisé au niveau des propriétés physico-chimiques et dont la vitesse dépend de la densité du mélange et de la viscosité des matériaux, le mélange final devant être soumis au procédé technologique donné, le mélange étant chargé par une conduite (11) et un dispositif rotatif (12) dans une deuxième ligne de réacteur (17) ;
V : un procédé d'encapsulation vide-gaz du mélange qui est chargé depuis la première ligne de réacteur (15) dans la deuxième ligne de réacteur (17) où, avec les additifs de procédé à base de calcium, ajoutés des supports (E) et (F), il se produit une réaction exothermique à des températures allant de 100-135°C et une microexplosion moléculaire, produisant de la vapeur d'eau, ce qui provoque une encapsulation vide-gaz importante et très rapide du mélange chargé, poursuivie dans des encapsulateurs sous vide rotatifs (19) et (20), qui créent des espaces dans lesquels apparaissent des microparticules anioniques complexes qui sont positionnées au centre de nouvelles molécules de composés complexes du calcium, créant des conditions équilibrées et une stabilité du nouveau type moléculaire sous forme de composés solidifiés, qui, sous forme de poudre de densité 950-975 kg/m$^3$ et à une température de 80-105°C, quittent un réacteur par une ouverture de décharge (22) sur un tapis de transport (26), comme produit final du procédé ;
VI : un stockage des composés solidifiés obtenus par refroidissement à l'air à une vitesse de 28-33°C/jour si entassés ou de 35-38°C/jour si détachés ; après avoir atteint une température d'environ 45°C, une compression en briquettes de dimensions 40 x 30 mm et de densité 2380-2900 kg/m$^3$, pour ainsi préparer un déchet qui peut être déposé aux sites communaux de décharge ; qui solidifié sous la forme de poudre, par sa capacité à être pompé, peut être transporté dans des camions-citernes pour une utilisation ultérieure dans le génie civil, la production d'énergie ou comme matériau spécial de protection pour des barrières techniques de construction contre les influences des matériaux toxiques, empoisonnés et radioactifs.

2. Procédé selon la revendication 1, dans lequel la vapeur d'eau, les matières gazeuses et les particules sont séparées du procédé dans un système de purification-filtration par des filtres à eau, à peigne ou à sac, et renvoyées par conduite dans l'espace entre les première et deuxième lignes de réacteur, où après condensation, elles se mélangent aux matériaux chargés, ce qui diminue la décharge de vapeur dans l'atmosphère.

3. Procédé selon la revendication 1 ou 2, dans lequel aux étapes II à VI, tous les types de déchets peuvent être traités, indépendamment de leur état, type, teneur chimique et propriétés physico-chimiques, s'ils contiennent au moins 5% d'hydrocarbures en volume ou si ceux-ci y sont ajoutés, et si l'on ajoute à un tel mélange, des additifs à base d'oxyde de calcium ou d'hydroxyde de calcium, comme seuls additifs du procédé, pour le traitement dans la deuxième ligne de réacteur.

4. Usine de préparation et de traitement de déchets communaux et industriels en produits utilisables, destinée à mettre en oeuvre le procédé décrit dans les revendications 1, 2 ou 3, comprend en une installation auxiliaire de préparation préalable des déchets et une installation de traitement des déchets, usine dans laquelle l'installation auxiliaire de préparation préalable comprend une trémie d'arrivée (33), une ligne de fragmentation et de détachement des matériaux (35) et une ligne de transport (36) ; et dans laquelle l'installation de traitement comprend des supports de déchets (A), (B), (C) et (D), et des supports d'additif de traitement (E) et (F), des doseurs de déchets (5), des doseurs d'additif (6) et un tapis transporteur (26), **caractérisée en ce que** l'installation auxiliaire de préparation préalable comprend outre en un variateur motorisé (34) et **en ce que** l'installation de traitement comprend outre, en des grilles de vibration (1), un dispositif de rotation des déchets (3), une première ligne de réacteur (15) avec son propre variateur démultiplié motorisé (16), une conduite entre les réacteurs (11), un dispositif de rotation entre les réacteurs (12), une deuxième ligne de réacteur (17) avec son propre variateur démultiplié motorisé (18), contenant l'encapsulateur de vide «+» rotation (19) et l'encapsulateur de vide « - » rotation (20) pour une encapsulation vide-gaz, un système de filtration (23) pour la purification de la vapeur d'eau et des particules, avec conduites de retour du condensat (24), sur la deuxième ligne de réacteur se trouvant des sorties de vapeur (25) et une décharge de composés solidifiés (22) vers le tapis transporteur (26) avec un récipient de composés solidifiés (27).

5. Usine selon la revendication 4, dans laquelle la première ligne de réacteur (15) et la deuxième ligne de réacteur (17) ont des capacités de traitement qui permettent un dosage exact des matériaux et une régulation de leur vitesse de rotation, assurant l'équilibre chimique requis pour le procédé.

Fig. 1.

Fig. 2.

Fig. 3.

Fig. 4.

Fig. 5.

Fig. 6.